# EUROPÄISCHE PATENTSCHRIFT

(11) **EP 2 835 700 B1**
(45) Veröffentlichungstag und Bekanntmachung des Hinweises auf die Patenterteilung: **30.03.2016**
(21) Anmeldenummer: 14168635.2
(22) Anmeldetag: 16.05.2014
(51) Int. Cl.: G05B 19/042, G05B 19/05, G05B 15/02

(54) **Verfahren zur Parametrierung eines Feldgeräts**
Method for adjusting the parameters of a field device
Procédé de paramétrage d'un appareil de terrain

(30) Priorität: 08.08.2013 DE 102013013155
(43) Veröffentlichungstag der Anmeldung: 11.02.2015
(73) Patentinhaber: Krohne Messtechnik GmbH, 47058 Duisburg (DE)
(72) Erfinder: Brockhaus, Helmut, 46145 Oberhausen (DE); Kunze, Johannes, 44795 Bochum (DE); Storm, Ralf, 45131 Essen (DE)
(74) Vertreter: Gesthuysen Patent- und Rechtsanwälte

(56) Entgegenhaltungen:
- EP-A1- 2 464 147
- EP-B1- 2 341 406
- WO-A2-2006/053668
- DE-A1-102005 034 168
- DE-B4- 10 329 407

## Beschreibung

Die Erfindung betrifft ein Verfahren zur Parametrierung eines Feldgerätes, wobei von mindestens einer Parametriereinheit mindestens ein Parameterwert an das Feldgerät übermittelt wird, wobei von dem Feldgerät mindestens ein Parameterwert empfangen wird, wobei von dem Feldgerät mindestens eine Rückmelde-Zeichenkette mindestens aus dem mindestens einen empfangenen Parameterwert erzeugt wird, wobei von dem Feldgerät die Rückmelde-Zeichenkette an die Parametriereinheit übermittelt wird und wobei von der Parametriereinheit die empfangene Rückmelde-Zeichenkette für einen Benutzer verständlich ausgegeben - insbesondere visuell dargestellt - wird. Weiterhin bezieht sich die Erfindung auf ein Feldgerät mit mindestens einer Schnittstelle zur Verbindung mit einer Parametriereinheit, mindestens einer Steuerkomponente und mindestens einem Datenspeicher, wobei die Steuerkomponente mindestens eine Rückmelde-Zeichenkette mindestens aus mindestens einem vom Feldgerät empfangenen Parameterwert erzeugt.

In der modernen Prozessautomatisierung werden in Prozessanlagen Feldgeräte zur Überwachung von Prozessgrößen (z. B. Füllstand, Durchfluss, Temperatur, pH-Wert usw.) und Aktoren für die Beeinflussung der Prozesse bzw. Prozessgrößen verwendet. Der Kommunikation zwischen den Feldgeräten und beispielsweise einer Leitwarte dienen Feldbusse, wobei unterschiedliche Datenprotokolle (z. B. HART, Profibus PA, 4...20 mA usw.) für die Übertragung der Mess- bzw. Steuerdaten verwendbar sind.

Daneben ist es teilweise auch vorgesehen, dass die Feldgeräte selbst Anzeigeeinheiten - sogenannte Displays - aufweisen, über die beispielsweise die Messdaten oder weitere Werte des Feldgerätes darstellbar sind. Über die Displays ist es ggf. auch in Verbindung mit einer Art von Tastatur am Feldgerät selbst oder über eine entsprechende Schnittstelle am Feldgerät und ein Bediengerät möglich, direkt auf das Feldgerät einzuwirken, um z. B. Programme zu starten, Parameter einzugeben oder auszuwählen.

Daher haben viele Feldgeräte zumindest zwei Ausgabemöglichkeiten: einmal eine Schnittstelle für den Anschluss des Feldgerätes an einen Feldbus zur Datenverbindung und einmal eine Anzeigeeinheit für die Vor-Ort-Darstellung. Dazu kommt ggf. die angesprochene Eingabeeinheit - z. B. in Form einer Tastatur oder einiger Knöpfe am Feldgerät - oder die Service-Schnittstelle zum Anschließen einer externen Einheit wie beispielsweise eines sogenannten Handgerätes (Handheld) oder eines tragbaren Computers in Form eines Laptops.

Problematisch ist es, wenn die Datenverbindung selbst nicht sicher ist und wenn gleichzeitig die Anwendung des Feldgerätes sicherheitskritisch ist. Wird vor allem das Feldgerät parametriert, wird also eingestellt, wie und mit welchen Berechnungs-, Grenz- oder Steuerwerten es funktionieren soll, so ist es überaus wichtig, dass die Parameterwerte sicher und zuverlässig im Feldgerät gesetzt sind.

Relevant sind bei den jeweiligen Sicherheitsanforderungen ggf. auch die Vorgaben, um dem insbesondere in der Prozessautomatisierung wichtigen SIL (Safety Integrity Level)-Standard zu genügen.

Dabei kann nicht nur die Datenkommunikation zwischen einer Parametriereinheit und dem Feldgerät unsicher und dadurch kritisch sein, sondern es können auch einzelne Komponenten oder Bestandteile des Feldgeräts unsicher sein.

In der Patentschrift EP 2 341 406 B1 wird ein gattungsgemäßes Verfahren zur Parametrierung eines Feldgeräts beschrieben. Dabei wird von einer Parametriereinheit ein Parameterwert an ein Feldgerät übertragen und dort schreibgeschützt abgespeichert. Das Feldgerät überträgt den empfangenen Parameterwert zurück zur Parametriereinheit und zwar in einem Format, das von der Parametriereinheit nicht verarbeitet werden kann. Dabei handelt es sich insbesondere um ein Textformat, so dass der Parameterwert als Zeichenkette rückgemeldet wird. Zusätzlich werden der Name des Parameters und ein Bestätigungscode übermittelt. Der Bestätigungscode wird dann wiederum von einem Benutzer nach einem Vergleich des rückübermittelten Parameterwerts mit dem eingegebenen Parameterwert an das Feldgerät gesendet.

Die Offenlegungsschrift WO 2006/053668 A2 beschreibt ein Verfahren zum Parametrieren eines Gerätes, wobei die Parameterwerte wenigstens einmal zur Kontrolle vom Gerät zur Parametriereinheit rückgelesen werden.

Für das Versenden von Parameterwerten von einer Parametriereinheit an ein Feldgerät wird in der Patentschrift DE 103 29 407 B4 vorgeschlagen, diese als Zeichenkette über das HART-Protokoll zu kommunizieren.

Um nach einem Neustart eines Feldgeräts sicherzustellen, dass alle Parameter unverändert sind, wird in der Offenlegungsschrift DE 10 2011 088 236 A1 vorgeschlagen, zu einem ersten Zeitpunkt eine Prüfsumme und nach dem Neustart eine weitere Prüfsumme aus den Parameterwerten zu ermitteln und die Prüfsummen miteinander zu vergleichen.

Ähnlich ist die Ausführung einer Parametrierung eines Feldgeräts gemäß der Patentschrift DE 10 2010 062 908 B4, in der vorgesehen ist, dass vom Feldgerät und von der Parametriereinheit jeweils eine Prüfsumme über die Parameterwerte erzeugt und angezeigt wird und dass ein Benutzer die beiden Prüfsummen miteinander vergleicht.

Bei der Parametrierung von Feldgeräten muss insgesamt auf die beteiligten Komponenten und Übertragungswege Rücksicht genommen werden, insofern sich dadurch Fehler einschleichen können. Daher besteht ein Ziel darin, möglichst zu verhindern, dass fehlerhafte oder unsichere und damit ggf. anfällige Komponenten oder unglückliche Verkettungen von Fehlern dazu führen, dass die Sicherheit der Parametrierung unterlaufen wird.

Gleichzeitig sollte eine Parametrierung auch unter ungünstigen Bedingungen möglich sein. So ist z. B. auch der Fall zu bedenken, dass das Feldgerät nicht direkt oder einfach zu erreichen ist, so dass beispielsweise eine Anzeige auf dem Feldgerät kaum und nicht immer zielführend ist. Eine Parametrierung sollte daher stets auch unter Beachtung der Praktikabilität optimiert werden.

Insbesondere ist zudem sicherzustellen, dass das Feldgerät in den Vorgang der Parametrierung bzw. in den Vorgang der Bestätigung der Parameterwerte eingebunden ist und dass nicht z. B. die Parametriereinheit nur Daten kopiert.

Dies liegt darin begründet, dass die Parametriereinheit je nach Ausgestaltung zwei Rollen übernimmt: Eingabe der Parameterwerte und Rückmelden der Parameterwerte. Daher muss gewährleistet werden, dass die Parameterwerte auch wirklich zum Feldgerät übertragen und von dort rückgemeldet worden sind.

Ein Schritt dahin ist u. a. die Verwendung von Zeichenketten oder Textdaten, die an sich von den beteiligten Geräten (Parametriereinheit bzw. Feldgerät) und auch von deren Komponenten selbst nicht verstanden und nicht verwendet werden können. Dadurch wird die Möglichkeit des Einwirkens auf den Informationsfluss begrenzt bzw. wird eine solche Einwirkung leichter erkennbar.

Der Erfindung liegt daher die Aufgabe zugrunde, ein Verfahren zur Parametrierung eines Feldgerätes - und ein entsprechendes Feldgerät- anzugeben, das die sichere Übergabe von Parameterwerten über eine möglicherweise unsichere Datenverbindung und möglicherweise unsichere Komponenten erlaubt.

Das erfindungsgemäße Verfahren, bei dem die zuvor hergeleitete und aufgezeigte Aufgabe gelöst ist, ist zunächst und im Wesentlichen dadurch gekennzeichnet, dass von dem Feldgerät die Rückmelde-Zeichenkette derartig erzeugt wird, dass der vom Feldgerät empfangene Parameterwert in eine Zeichenkette umgewandelt wird und dass in die Zeichenkette des empfangenen Parameterwerts an mindestens einer - insbesondere vorgebbaren oder allein durch das Feldgerät festgelegten - Position mindestens ein - insbesondere für den Benutzer verständliches und vorgebbares oder allein durch das Feldgerät festgelegtes - Zeichen eingefügt wird.

Bei dem erfindungsgemäßen Verfahren erzeugt das Feldgerät aus dem jeweiligen Parameterwert, den es von der Parametriereinheit erhalten hat, eine Zeichenkette - insbesondere nur unter Verwendung von ASCII-Zeichen - und fügt in diese Zeichenkette mindestens ein zusätzliches Zeichen (möglichst auch ein ASCII-Zeichen) als Störzeichen an wenigstens einer Position ein. Das eingefügte Zeichen befindet sich dabei insbesondere innerhalb der Zeichen des jeweiligen Parameterwerts, so dass bei einer beispielsweise visuellen Darstellung der Parameterwert als gestört bzw. unterbrochen erscheint.

Das Feldgerät erzeugt also eine gestörte Zeichenkette, die an die Parametriereinheit zurück übermittelt wird. Dort wird die gestörte Zeichenkette für einen Benutzer - also einen Menschen, der die Parametrierung vornimmt - verstehbar dargestellt und insbesondere in einer Darstellung entsprechend visualisiert.

Für den Abgleich werden vorzugsweise der jeweilige eingegebene und an das Feldgerät übermittelte Parameterwert und die empfangene Rückmelde-Zeichenkette auf der Parametriereinheit dargestellt, so dass von dem Benutzer der Vergleich vorgenommen werden kann.

Dabei werden die Parameterwerte an der Parametriereinheit in einer Ausgestaltung jeweils als Zeichenketten eingegeben und in einer anderen - alternativen oder ergänzenden - Ausgestaltung aus einer Liste ausgewählt.

In einer Ausgestaltung werden - unabhängig von der Art der Eingaben - der eingegebene Parameterwert und die Rückmelde-Zeichenkette im Textformat - also als Zeichenkette - auf der Parametriereinheit für den Benutzer verständlich ausgegeben und insbesondere visuell dargestellt.

Da die Zeichenkette des an der Parametriereinheit eingegebenen Parameterwerts und die dort empfangene Rückmelde-Zeichenkette sich durch das mindestens eine (Stör-)Zeichen voneinander unterscheiden, scheidet der Fall aus, dass der Parameterwert nur zweifach von der Parametriereinheit dargestellt wird. Dabei ist insbesondere in der Parametriereinheit nicht hinterlegt, wie die Rückmelde-Zeichenkette erzeugt bzw. wie und wo welches oder welche Zeichen in die Zeichenkette des Parametrierwerts eingefügt wird bzw. werden. Daher kann die Parametriereinheit keine angebliche Rückmelde-Zeichenkette selbst erzeugen.

Das eingefügte Zeichen ist insbesondere in einer Ausgestaltung aus der Gruppe der über ein Display darstellbaren Zeichen ausgewählt.

In einer Ausgestaltung variiert das Feldgerät die Position, die Art und die Anzahl der eingefügten (Stör-)Zeichen. Das Schema der Variation bzw. des Setzens des Zeichens oder der Zeichen ist in einer Ausgestaltung vorgegeben, so dass insbesondere ein Benutzer aus der Rückmelde-Zeichenkette mehr Information über das Feldgerät ableiten kann. In einer alternativen Ausgestaltung variiert das Feldgerät selbständig und insbesondere zufällig das Einfügen des oder der Zeichen.

Werden mehr als ein Parameterwert eingegeben, so ist in einer Ausgestaltung vorgesehen, dass bei einer Parametrierung stets alle diese Parameterwerte eingegeben werden müssen. Dabei findet die Eingabe der Parameterwerte insbesondere in einer festen Reihenfolge statt.

In einer Ausgestaltung werden in einem Dialog zwischen Parametriereinheit und Feldgerät zu Beginn der Parametrierung die einzugebenden Parameter abgestimmt und ggf. auch deren Reihenfolge bei der Eingabe festgelegt.

Bei dem Feldgerät handelt es sich insbesondere um einen Aktor oder ein Messgerät. Die Parametriereinheit ist beispielsweise eine Leitwarte, ein (vorzugsweise tragbarer) Computer (Laptop) oder ein Handheld als mobiles Bediengerät für Feldgeräte oder ein PDA.

In einer Ausgestaltung stehen für die Kommunikation zwischen Parametriereinheit und Feldgerät nur in ihrem Datenumfang beschränkte Telegramme zur Verfügung, so dass in einer Ausgestaltung die Rückmelde-Zeichenketten insbesondere frei von einem Namen oder einer sonstigen Bezeichnung des jeweils von dem Parameterwert betroffenen Parameters sind.

In einer Ausgestaltung wird von dem Feldgerät - insbesondere als Teil einer Rückmelde-Zeichenkette - an die Parametriereinheit mindestens ein dem Feldgerät zugeordneter Identifikator (also eine Geräte-ID) übertragen. Hierüber erhält der Benutzer an der Parametriereinheit eine Information darüber, welches Feldgerät die Parameterwerte erreichen. Dies ist ggf. für den Fall relevant, dass in einer Prozessanlage Geräte ausgetauscht oder dass Datenverbindungen geändert werden können.

In einer Ausgestaltung wird von dem Feldgerät die Rückmelde-Zeichenkette derartig erzeugt, dass die Rückmelde-Zeichenkette eine dem empfangenen Parameterwert zugehörige physikalische Einheit (z. B. Volt, Ampere, Sekunde oder Einheitenlos für den pH-Wert) aufweist. In dieser Ausgestaltung überträgt das Feldgerät mit der Rückmelde-Zeichenkette auch die physikalische Einheit des Parameters, dessen Wert durch den Parameterwert eingestellt werden soll. Hierdurch wird von dem Feldgerät implizit angeben, wie der Parameterwert vom Feldgerät verstanden und wofür der Parameterwert eingesetzt wird. Der Aufbau der Rückmelde-Zeichenkette ist in dieser Ausgestaltung daher teilweise derartig, dass einer Zeichenkette des Parameterwerts - mit mindestens einem darin eingefügten und eigentlich störendem Zeichen - die zugehörige physikalische Einheit - ebenfalls als Abfolge von Zeichen - folgt. Über den Abgleich der physikalischen Einheit kann der Benutzer auch feststellen, ob er den richtigen Parameterwert eingegeben hat bzw. ob der Parameterwert vom Feldgerät richtig verstanden, d. h. dem richtigen Parameter zugeordnet worden ist.

In einer Ausgestaltung werden N Parameterwerte von der Parametriereinheit an das Feldgerät übermittelt. Dabei ist N eine ganze Zahl größer oder gleich 2. Die einzugebenden Parameterwerte gehören dabei ggf. zu den Parametern, die von einem Nutzer des Feldgeräts eingestellt und entsprechend freigegeben worden sind. Alternativ handelt es sich um Parameter, die insbesondere bei der Fertigung durch den Hersteller des Feldgeräts eingestellt werden.

Von dem Feldgerät werden - gemäß der vorbeschriebenen Weise - entsprechend N Parameterwerte empfangen, und jeweils aus mindestens einem der insgesamt N empfangenen Parameterwerte wird eine Rückmelde-Zeichenkette erzeugt. Das Feldgerät erzeugt daher insgesamt zumindest N Rückmelde-Zeichenketten, die jeweils aus einem der N empfangenen Parameterwerte hervorgegangen sind und den jeweiligen Parameterwert in Verbindung mit dem mindestens einen eingefügten Zeichen beinhalten.

Die N Rückmelde-Zeichenketten werden von dem Feldgerät an die Parametriereinheit übermittelt, wobei sich in einer Ausgestaltung jeweils an den Empfang von einem Parameterwert direkt das Erzeugen der jeweiligen Rückmelde-Zeichenkette und deren Übermittlung an die Parametriereinheit anschließen, so dass also jeder Parameterwert im Wesentlichen direkt und unmittelbar eine Bestätigung durch eine Rückmeldung an die Parametriereinheit erfährt.

Sind die N Rückmelde-Zeichenketten an die Parametriereinheit übermittelt worden, d. h. hat N-mal die Übermittlung eines Parameterwerts, das Erzeugen und Übermitteln der zugehörigen Rückmelde-Zeichenkette stattgefunden, so übermittelt das Feldgerät im Anschluss daran einen Kontrollcode an die Parametriereinheit.

Das Feldgerät weiß in einer Ausgestaltung um die Anzahl N der Parameterwerte, weil diese Anzahl N fest vorgegeben bzw. vereinbart worden ist, so dass jeweils stets N Parameterwerte eingegeben werden müssen. Alternativ wird ein entsprechendes Informations-Signal von der Parametriereinheit abgewartet; so z. B. ein besonderes Zeichen oder eine einen vorgebbaren Grenzwert zeitlich überschreitende Pause nach der Übermittlung eines Parameterwerts.

In einer Ausgestaltung ist vorgesehen, dass von dem Feldgerät nach dem Übermitteln des Kontrollcodes an die Parametriereinheit mindestens ein Bestätigungscode von der Parametriereinheit empfangen wird. Der Bestätigungscode wird dabei insbesondere von einem Benutzer über die Parametriereinheit eingegeben. Das Feldgerät erzeugt dann ausgehend von einem Vergleich von Kontrollcode und empfangenem Bestätigungscode ein Vergleichsergebnis. Abhängig von dem Vergleichsergebnis aktiviert das Feldgerät die N empfangenen Parameterwerte für einen Betrieb des Feldgeräts. Aktivieren bedeutet in diesem Zusammenhang insbesondere, dass das Feldgerät die Parameterwerte freigibt, so dass sie von den entsprechenden Komponenten oder Einheiten des Feldgeräts für den Betrieb des Feldgeräts genutzt werden können.

In einer Ausgestaltung stellt die Parametriereinheit den empfangenen Kontrollcode für den Benutzer verstehbar - also insbesondere visuell erkennbar - dar. Daraufhin gibt der Benutzer den dargestellten Kontrollcode in die Parametriereinheit als Bestätigungscode ein, der zu dem Feldgerät zurück übermittelt wird.

In einer Ausgestaltung besteht daher der Kontrollcode nur aus alphanumerischen Zeichen - ggf. um ausgesuchte Sonderzeichen (z. B. Punkt, Komma, Semikolon, Bindestrich usw.) erweitert, um eine Eingabe auch über ein entsprechend einfach zu haltende Tastatur einer Parametriereinheit zu ermöglichen. Den dargestellten Kontrollcode schreibt der Benutzer in die Parametriereinheit und bestätigt damit den Empfang des Kontrollcodes. Aus der Eingabe des Benutzers wird ebenfalls eine Zeichenkette erzeugt und als Bestätigungscode an das Feldgerät übermittelt.

Das Feldgerät vergleicht daraufhin den gesendeten Kontrollcode mit dem empfangenen Bestätigungscode und erzeugt ein Vergleichsergebnis.

In einer weiteren Ausgestaltung hat der Kontrollcode nur eine gewisse zeitliche Gültigkeit, so dass der Benutzer den Bestätigungscode innerhalb einer gewissen vorgebbaren Zeit eingeben und die Parametriereinheit diesen an das Feldgerät übermitteln muss.

Handelt es sich bei Kontrollcode und Bestätigungscode beispielsweise jeweils um Zeichenketten und sind beide inhaltlich identisch, so aktiviert das Feldgerät vorzugsweise die Parameterwerte, so dass das Feldgerät bzw. dessen Komponenten mit den Parameterwerten ihren Dienst versehen und z. B. Prozessgrößen messen bzw. auf solche einwirken.

In einer Ausgestaltung befindet sich auch im jeweils übertragenen Kontroll- und/oder Bestätigungscode mindestens ein zusätzliches - im Sinne der obigen Ausführungen störendes - Zeichen, das ggf. bei der Eingabe an der Parametriereinheit bzw. beim Vergleich im Feldgerät nicht einzugeben bzw. zu berücksichtigen ist.

Durch die Eingabe des Bestätigungscodes beendet der Benutzer in einer Ausgestaltung das eigentliche Parametrierverfahren im engeren Sinne und zumindest in Bezug auf seine Handlungen bzw. seine Eingaben von Parameterwerten.

In einer Ausgestaltung wird der Kontrollcode von dem Feldgerät basierend auf mindestens einer Zufallszahl erzeugt. In einer Ausgestaltung ist der Kontrollcode insbesondere unabhängig von den empfangenen Parametwerten, so dass über den Kontrollcode insbesondere keine Information bezüglich der konkreten Werte übermittelt wird.

In einer Ausgestaltung ist zumindest für die Erzeugung des Kontrollcodes eine Steuerkomponente des Feldgeräts vorgesehen, die nach einem höheren Sicherheitsstandard ausgestaltet worden ist als mindestens eine andere Komponente - z. B. ein Datenspeicher oder eine Schnittstelle - des Feldgeräts.

In einer Ausgestaltung werden von der Steuerkomponente auch die Rückmelde-Zeichenketten erzeugt und an die Parametriereinheit übermittelt bzw. empfängt auch oder alternativ zumindest die Steuereinheit die Parameterwerte und führt entsprechend auf Seite des Feldgeräts die Schritte des erfindungsgemäßen Verfahrens zur Parametrierung aus.

Indem die Steuereinheit eine höhere Sicherheitsanforderung erfüllt und damit auch eine sichere Komponente ist, können ihr auch die wesentlichen Schritte des Verfahrens der Parametrierung übertragen werden.

In einer Ausgestaltung schließt sich an das Eingaben der Parameterwerte deren Verwendung und Absicherung im Feldgerät an. Details hierzu finden sich in den folgend beschriebenen Ausgestaltungen.

In einer Ausgestaltung ist vorgesehen, dass von dem Feldgerät der mindestens eine empfangene Parameterwert in mindestens einem Datenspeicher abgespeichert wird und dass von dem Feldgerät mindestens ausgehend von dem mindestens einen empfangenen Parameterwert mindestens ein Initial-Prüfwert erzeugt wird.

Das Abspeichern wird dabei in einer Ausgestaltung bereits während der Verfahrensschritte bei der Eingabe der folgenden Parameterwerte vorgenommen. Werden mehrere Initial-Prüfwerte über Teilgruppen der Parameterwerte erzeugt, so werden diese in einer zusätzlichen Ausgestaltung während des noch laufenden Parametrierverfahrens erzeugt bzw. berechnet.

Werden N Parameterwerte übermittelt, so wird in einer Ausgestaltung über alle N Parameterwerte der Initial-Prüfwert erzeugt.

In einer alternativen Ausgestaltung werden die Parameterwerte in Gruppen gesammelt und über die einzelnen Gruppen werden jeweils gruppenbezogene Initial-Prüfwerte generiert.

Bei dem Prüfwert handelt es sich beispielsweise um eine Prüfsumme oder einen sogenannten CRC (cyclic redundancy check).

Bei der Erzeugung des Initial-Prüfwerts bzw. der Initial-Prüfwerte wird in einer Ausgestaltung zusätzlich der erzeugte Kontrollcode und/oder der empfangene Bestätigungscode hinzugenommen. Da der Kontrollcode in einer Ausgestaltung insbesondere jeweils speziell für die aktuelle Parametrierung erzeugt wird, kann durch die Verwendung des Kontrollcodes bei der Generierung des Initial-Prüfwerts sichergestellt werden, dass jeweils der zuletzt abgelegte Satz an Parameterwerten bzw. der zuletzt abgespeicherte Parameterwert auch wirklich der aktuelle Wert ist.

In einer Ausgestaltung wird nach der Eingabe der Parameterwerte ein sogenannter Warmstart des Feldgeräts durchgerührt, in dessen Anschluss die - insbesondere gemäß der zuvor beschriebenen Weise - neu eingegebenen Parameterwerte an die entsprechenden Komponenten des Feldgeräts bzw. die entsprechenden Stellen im Feldgerät eingebracht bzw. eingetragen werden.

Dabei ist in einer Ausgestaltung vorgesehen, dass nach dem Abspeichern des mindestens einen empfangenen Parameterwerts - und insbesondere auch nach dem Erzeugen des Initial-Prüfwerts - mindestens einer Teilkomponente - dabei handelt es sich beispielweise um einen Mikroprozessor oder eine Steuereinheit usw. - des Feldgeräts mindestens ein abgespeicherter Parameterwert aus dem Datenspeicher zugeführt wird. Dabei handelt es sich insbesondere um die Teilkomponenten, für die der Parameterwerte jeweils bestimmt ist.

Nach dem Warmstart erhalten also die Komponenten ihre für das Zusammenwirken und für das richtige und ggf. auf den Prozess zugeschnittene Funktionieren erforderlichen Parameterwerte.

In einer ergänzenden Ausgestaltung werden die in Folge der Parametrierung vom Feldgerät erhaltenen und entsprechend abgespeicherten Parameterwerte passend im Feldgerät verteilt. Anschließend wird vom Feldgerät - und insbesondere von der sicheren Steuerkomponente - ausgehend von den aus dem Datenspeicher entnommenen Parameterwerten ein aktueller Prüfwert erzeugt.

In einer Ausgestaltung werden die Parameterwerte von den einzelnen Komponenten abgefragt bzw. zusammengetragen. In einer anderen Ausgestaltung wird direkt auf die Parameterwerte in dem Datenspeicher zugegriffen.

In einer Ausgestaltung wird bei der Erzeugung des aktuellen Prüfwerts zusätzlich noch der erzeugte Kontrollcode und/oder der empfangene Bestätigungscode einbezogen.

In einer Ausgestaltung werden Initial-Prüfwert und aktueller Prüfwert über alle Parameterwerte des Feldgeräts ermittelt.

In einer alternativen Ausgestaltung werden die beiden vorgenannten Prüfwerte nur über die Parameterwerte erzeugt, die über das zuvor beschriebene Verfahren für einen Benutzer, z. B. für eine vom Betreiber des Feldgeräts beauftragte Person, eingebbar sind.

Anschließend erfolgt auch hier ein Vergleich zwischen dem Initial-Prüfwert und dem aktuellen Prüfwert mit der Erzeugung eines Vergleichsergebnisses.

Durch den Vergleich zwischen Initial- und aktuellem Prüfwert kann sichergestellt werden, dass in den einzelnen Komponenten auch jeweils die eingegebenen Parameterwerte verwendet werden.

Wird bei der Erzeugung der Prüfwerte jeweils der Kontroll- bzw. Bestätigungscode, der lediglich der sicheren Komponente, die den Abgleich der Prüfwerte vornimmt, bekannt ist, einbezogen, so wird verhindert, dass ein Kopie von alten Parameterwerten verwendet wird.

Unterscheiden sich Initial-Prüfwert und aktueller Prüfwert voneinander, so geht in einer Ausgestaltung wenigstens die sichere Steuerkomponente, die hier auch den Abgleich der Prüfwerte vornimmt, in einen abgesicherten Fehlerzustand über. In einer Ausgestaltung wird zusätzlich oder alternativ eine Fehlermeldung erzeugt.

In einer Ausgestaltung wird auch ein Umschalten des Feldgeräts zwischen einem sicherheitsgerichteten (z. B. Sil-) Zustand und einem Nicht-Sil-Zustand wie die Eingabe eines Parameterwerts umgesetzt, so dass für dieses Umschalten ggf. auch nur ein Parameterwert übertragen und rückübertragen wird. Als Parameterwert wird dabei in einer Ausgestaltung ein Validierungscode übertragen, der für das Wechseln zwischen den beiden Modi erforderlich ist.

Die zuvor hergeleitete und aufgezeigte Aufgabe ist nach einer weiteren Lehre der Erfindung bei dem eingangs genannten Feldgerät dadurch gelöst, dass die Steuerkomponente die Rückmelde-Zeichenkette derartig erzeugt, dass der vom Feldgerät empfangene Parameterwert in eine Zeichenkette umgewandelt wird und dass in die Zeichenkette des empfangenen Parameterwerts an mindestens einer - insbesondere vorgebbaren oder allein durch die Steuerkomponente festgelegten - Position mindestens ein - insbesondere für einen Benutzer verständliches und vorgebbares oder allein durch die Steuerkomponente festgelegtes - Zeichen eingefügt wird. In dem Feldgerät werden insbesondere die Schritte des oben beschriebenen Verfahrens umgesetzt.

In einer Ausgestaltung sind das Feldgerät und die Parametriereinheit einstückig ausgestaltet. Daher wird das Feldgerät nicht über eine zusätzliche Gerätschaft wie eine separate Parametereinheit parametriert, sondern das Feldgerät wird insbesondere über eine entsprechende Eingabeeinheit direkt parametriert. Das Verfahren zur Parametrierung dient daher insbesondere der Sicherheit in Bezug auf Teilkomponenten des Feldgeräts, die ggf. über einen internen Bus miteinander verbunden sind.

Im Einzelnen gibt es nun eine Vielzahl von Möglichkeiten, das erfindungsgemäße Verfahren und das erfindungsgemäße Feldgerät auszugestalten und weiterzubilden. Dazu wird verwiesen einerseits auf die dem Patentanspruch 1 und dem Patentanspruch 9 nachgeordneten Patentansprüche, andererseits auf die folgende Beschreibung von Ausführungsbeispielen in Verbindung mit der Zeichnung. In der Zeichnung zeigen
- Fig. 1: eine schematische Darstellung einer Parametrierung eines Feldgerätes,
- Fig. 2: eine schematische Darstellung eines Feldgerätes und
- Fig. 3: einen schematischen Ablauf einzelner Schritte während einer Parametrierung eines Feldgerätes.

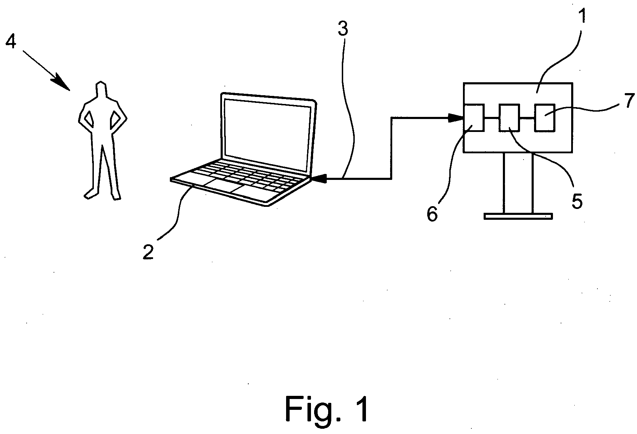

In der Fig. 1 ist schematisch die Parametrierung eines Feldgeräts 1, bei dem es sich hier um ein Durchflussmessgerät handelt, durch eine Parametriereinheit 2 dargestellt. Zwischen dem Feldgerät 1 und der Parametriereinheit 2 ist hier eine kabelgebundene Datenverbindung 3 vorgesehen, die insbesondere bidirektional ausgestaltet ist. In einer alternativen - nicht dargestellten - Ausgestaltung besteht zwischen dem Feldgerät 1 und der Parametriereinheit 2 eine Funkverbindung.

Die Verbindung zwischen Feldgerät 1 und Parametriereinheit 2 kann beispielsweise nur temporär für die Eingabe der Parameter gegeben sein. Dazu passt auch die dargestellte Parametriereinheit 2 in Form eines Laptops. Es kann sich jedoch auch um eine - hier nicht dargestellte - ständige Verbindung handeln, wie sie beispielsweise durch einen Feldbus gegeben ist, an dem das Feldgerät permanent angeschlossen wäre.

Handelt es sich bei der Parametriereinheit um ein Handbediengerät (also ein sogenanntes Handheld) oder um einen Service-Laptop, so wird die Datenverbindung 3 bevorzugt nur für die Zeit der Parametrierung erzeugt. Die Parametriereinheit 2 ist dabei in der dargestellten Ausgestaltung eine vom Feldgerät 1 unabhängige und eigenständige Einheit.

Der Benutzer 4 gibt über die Parametriereinheit 2 Parameterwerte ein, die über die Datenverbindung 3 an das Feldgerät 1 übermittelt werden. Die Schritte der Parametrierung auf Seiten des Feldgeräts 1 werden von einer nach einem entsprechenden Sicherheitsstandard ausgestalteten Steuerungskomponente 5 ausgeführt.

Die Steuerungskomponente 5 empfängt jeweils über die Schnittstelle 6 einen Parameterwert und erzeugt daraus eine Rückmelde-Zeichenkette. Die Art und Länge der Rückmelde-Zeichenketten ist dabei auch davon abhängig, was für eine Schnittstelle 6 zur Rückübertragung der Rückmelde-Zeichenkette und welche Protokoll-Art verwendet werden. Daher besteht ggf. eine Limitierung der Anzahl der in einem sogenannten Telegramm zu versendenden Zeichen.

Der empfangene Parameterwert ergibt sich aus den über die Datenverbindung 3 empfangenen und einem für die Datenkommunikation verwendeten Protokoll (z. B. HART) zugehörigen und zulässigen elektrischen Signalen. In einer Ausgestaltung tragen dabei die Kommunikationssignale direkt eine Zeichenkette als Parameterwert oder sie führen den jeweiligen Parameterwert in einem anderen Format mit sich mit.

Die Rückmelde-Zeichenkette - also ein String, der an und für sich von den beteiligten Komponenten und Gerätschaften nicht direkt verstanden bzw. verwendet werden kann, sondern zunächst entsprechend interpretiert werden muss - wird erzeugt aus dem empfangenen Parameterwert. Der Parameterwert wird dabei in eine Zeichenkette umgewandelt.

Dieser Schritt ist insbesondere dann besonders einfach, wenn der Parameterwert bereits als Zeichenkette von der Parametriereinheit versendet und auch als eine solche vom Feldgerät empfangen wird. In diese Zeichenkette wird dann an mindestens einer Position mindestens ein zusätzliches und damit störendes Zeichen eingefügt.

Ergänzend wird noch die physikalische Einheit des Parameterwerts hinzugefügt. Wird also beispielweise eine Spannung eingegeben, so folgt der gestörten Zeichenkette der Buchstabe V.

Insgesamt ist die Rückmelde-Zeichenkette eine Folge von - insbesondere visuell darstellbaren - Zeichen, die einen gestörten Parameterwert und die zugehörige physikalische Einheit darstellen.

In einer Ausgestaltung beinhaltet auch zumindest eine Rückmelde-Zeichenkette einen dem Feldgerät 1 zugeordneten und diesen eindeutig identifizierenden Indentifikator als ID.

Für eine direkte Verbindung kann dieses Merkmal auch ausgeschaltet werden, da eindeutig ist, mit welchem Feldgerät 1 die Parametriereinheit 2 verbunden ist.

Eine solche ID ist jedoch insbesondere dann relevant, wenn zwischen Parametriereinheit 2 und Feldgerät 1 ein größerer Abstand und/oder mehrere andere Feldgeräte angeordnet sind. Dies besonders in dem Fall, dass die Parametriereinheit 2 und das Feldgerät 1 innerhalb einer Prozessanlage über einen Feldbus miteinander verbunden sind.

Die Rückmelde-Zeichenkette verschickt die Steuerkomponente 5 über die Schnittstelle 6 zurück an die Parametriereinheit 2, wo sie für den Benutzer 4 verstehbar, also insbesondere visuell dargestellt wird.

Dieser Vorgang wiederholt sich N-mal für N einzugebende Parameterwerte, also mindestens zwei Mal.

Um die Kommunikation zu vereinfachen, werden dabei die Parameterwerte jeweils in einer vorgegebenen Reihenfolge eingegeben.

Sind alle Parameterwerte übertragen und rückübertragen worden, so versendet die Steuerkomponente 5 einen Kontrollcode an die Parametriereinheit 2. Dieser Kontrollcode wird dabei insbesondere in Abhängigkeit von einer Zufallszahl und in der gezeigten beispielhaften Ausgestaltung insbesondere unabhängig von dem Wert der übermittelten Parameterwerte erzeugt. Der Kontrollcode ist damit spezifisch der jeweiligen Eingabe der Parameterwerte zugeordnet und erlaubt darüber auch eine Identifizierung des Parametrierungsvorgangs.

Der Kontrollcode wird ebenfalls durch die Parametriereinheit 2 dargestellt, um - insbesondere in dem Fall, dass sich durch die Rückmelde-Zeichenketten gezeigt hat, dass alles bei der Parametrierung seinen korrekten Verlauf genommen hat - vom Benutzer 4 eingegeben und als Bestätigungscode an das Feldgerät 1 übermittelt zu werden.

In der Steuerkomponente 5 werden der Kontrollcode und der Bestätigungscode miteinander verglichen. Das sich daraus ergebende Vergleichsergebnis führt im positiven Fall der Übereinstimmung dazu, dass die Parameterwerte für die Verwendung im Feldgerät 1 aktiviert bzw. freigegeben werden.

Die Aktivierung erfolgt dabei in der dargestellten Ausgestaltung des Feldgeräts 1 dadurch, dass von der Steuerkomponente die Parameterwerte in einem Datenspeicher 7 abgelegt werden. Zudem erzeugt die Steuerkomponente 5 zumindest über die Parameterwerte und über den Kontrollcode einen Initial-Prüfwert, der ebenfalls in dem Datenspeicher 7 abgelegt wird.

Danach wird ein sogenannter Warmstart des Feldgeräts 1 ausgelöst, in dessen Folge die einzelnen Komponenten oder Einheiten des Feldgeräts 1 für den Betrieb ihre Parameterwerte aus dem Datenspeicher 7 beziehen. In dem Datenspeicher 7 sind dabei insbesondere noch weitere Parameterwerte abgespeichert, die einem normalen Benutzer 4 nicht zugänglich und damit durch ihn auch nicht veränderbar sind.

Aus den den Komponenten zugewiesenen Parameterwerten und dem Kontrollcode, der insbesondere gesondert in der Steuerkomponente 5 hinterlegt ist, wird ein aktueller Prüfwert erzeugt und mit dem in dem Datenspeicher 7 hinterlegten Initial-Prüfwert verglichen. Für die Gruppen an Parameter wird dabei entsprechend der jeweils zugehörige Initial-Prüfwert mit dem passenden aktuellen Prüfwert verglichen.

Zeigt das Vergleichsergebnis eine Übereinstimmung an, so kann das Feldgerät 1 seine Aufgaben versehen und hier beispielsweise den Durchfluss eines Mediums ermitteln. Ergibt sich aus dem Vergleichsergebnis eine Abweichung, so ist offensichtlich ein Fehler aufgetreten und die Steuerkomponente 5 geht in einen gesicherten Fehlerzustand über, wodurch das ganze Feldgerät 1 in einen Fehlerzustand übergeht.

Ein Fehler kann sich beispielsweise dadurch ereignen, dass ein Wert im Datenspeicher 7 falsch abgelegt, dort verändert oder falsch abgerufen wird, dass ein Parameterwert nicht richtig bei einer Komponente des Feldgeräts 1 ankommt oder dass durch den Warmstart im Datenspeicher 7 aus Versehen ein alter Parametersatz eingespielt worden ist. Dieser alte Parametersatz verfügt jedoch über einen Initial-Prüfwert, der mit einem alten Kontrollcode erzeugt worden ist.

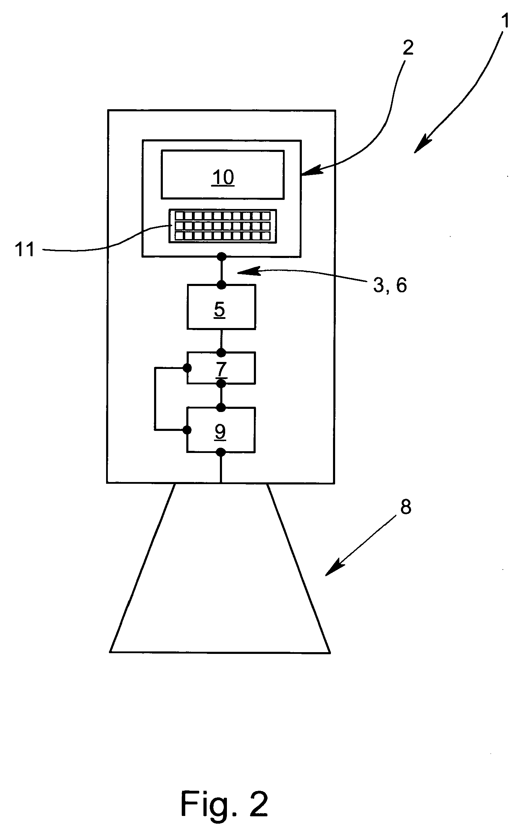

Zeigt die Fig. 1 ein Feldgerät 1, das mit einer separaten Parametriereinheit 2 verbunden ist, so stellt die Fig. 2 ein Feldgerät 1 dar, das so ausgestaltet ist, dass direkt am Feldgerät 1 Parameterwerte eingebbar sind.

Das Feldgerät 1 der Fig. 2 verfügt über eine Antenne 8, über die eine Füllstandsmessung nach dem Radar-Prinzip realisierbar ist. Für die Erzeugung der abzustrahlenden Mikrowellen und die Auswertung der empfangenen Mikrowellen ist eine Elektronikeinheit 9 vorgesehen.

Das Feldgerät 1 verfügt über ein Display 10 und eine Tastatur 11, die beide insgesamt als Parametriereinheit 2 aufgefasst werden. Daher sei auch die interne Datenverbindung 3 zwischen dieser Parametriereinheit 2 und der Steuerkomponente 5 als Schnittstelle 6 verstanden, über die das Feldgerät 2 letztendlich von der Parametriereinheit 2 die Parameterwerte erhält.

Da durch die Einstückigkeit die Zuordnung von Parametriereinheit 2 und Feldgerät 1 eindeutig ist, ist es daher insbesondere nicht vorgesehen, dass die Steuerkomponente 5 einen Identifikator für das Feldgerät 1 in die Rückmelde-Zeichenkette - oder in wenigstens eine Rückmelde-Zeichenkette - einpflegt.

Die Sicherheitsüberwachung der Parametrierung bezieht sich bei dem Feldgerät 1 der Ausgestaltung der Fig. 2 auf die Datenkommunikation innerhalb des Feldgeräts 1 bzw. nur der Komponenten des Feldgeräts 1 selbst.

An diesem Beispiel des Feldgeräts 1 sei insbesondere der Ablauf des Warmstarts nach der Eingabeprozedur der Parameterwerte verdeutlicht.

Angenommen sei daher, dass die Steuerkomponente 5 festgestellt hat, dass der Kontrollcode und der Bestätigungscode identisch sind, und dass die Parameterwerte und die für einzelne Gruppen der Parameterwerte in Abhängigkeit von dem Kontrollcode erzeugten Initial-Prüfwerte in dem Datenspeicher 7 hinterlegt sind.

Nach dem Warmstart des Feldgeräts 1 beziehen die einzelnen Komponenten ihre Parameterwerte aus dem Datenspeicher 7. Dies gilt hier insbesondere für die Elektronikeinheit 9, die beispielsweise Referenzwerte als Parameterwerte zugewiesen bekommt.

Die Steuerkomponente 5 greift daraufhin aus der Elektronikeinheit 9 und ggf. weiteren - hier nicht dargestellten - Komponenten die dort befindlichen Parameterwerte ab und ermittelte daraus mit dem ihr bekannten Kontrollcode die aktuellen Prüfwerte.

Dann vergleicht die Steuerkomponente 5 die aktuellen Prüfwerte mit den in dem Datenspeicher 7 abgelegten Initial-Prüfwerten und erzeugt ein Vergleichsergebnis. Eine Übereinstimmung führt dazu, dass das Feldgerät 1 die Messungen durchführt. Im Falle eine Abweichung versetzt die Steuerkomponente 5 das Feldgerät 1 in einen abgesicherten Fehlerzustand.

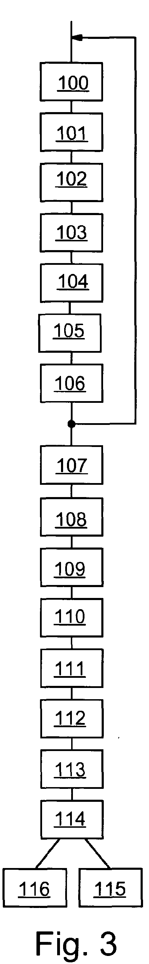

Einen beispielhaften Ablauf einer Parametrierung zeigt die Fig. 3.

Im Schritt 100 wird ein Parameterwert über eine Parametriereinheit eingeben. Dieser Parameterwert wird im Schritt 101 an das Feldgerät übermittelt und dort im Schritt 102 empfangen. Im Schritt 103 wird ausgehend von dem empfangenen Parameterwert eine Rückmelde-Zeichenkette erzeugt, die im Schritt 104 an die Parametriereinheit kommuniziert, dort im Schritt 105 empfangen und im Schritt 106 für einen Benutzer so verständlich dargestellt wird, dass der Benutzer einen Vergleich zwischen dem eingegebenen Parameterwert und der Rückmelde-Zeichenkette vornehmen kann.

Dieser Ablauf erfolgt N-mal. Dabei sind die Parameterwerte insbesondere in einer bestimmten, vorbekannten Reihenfolge einzugeben. In einer Ausgestaltung kann die Eingabe auch durch eine Aktion des Benutzers unterbrochen bzw. beendet werden.

Hat das Feldgerät alle N Parameterwerte empfangen und gleichsam über die N Rückmelde-Zeichenketten quittiert, so erzeugt das Feldgerät im Schritt 107 den Kontrollcode, der im Schritt 108 an die Parametriereinheit übermittelt, dort im Schritt 109 empfangen und im Schritt 110 für den Benutzer verständlich angezeigt wird.

Im Schritt 111 gibt der Benutzer den Bestätigungscode ein, der im Schritt 112 an das Feldgerät übermittelt und dort im Schritt 113 empfangen wird.

Im Schritt 114 erzeugt das Feldgerät ausgehend von dem Kontrollcode und dem Bestätigungscode ein Vergleichsergebnis, das darüber Auskunft gibt, ob beide Codes identisch oder unterschiedlich sind.

Sind Kontrollcode und Bestätigungscode gleich, so hat der Benutzer damit insbesondere bestätigt, dass die Rückmelde-Zeichenketten die eingegebenen Parameterwerte korrekt wiedergegeben haben. Daher aktiviert im Schritt 115 das Feldgerät die Parameterwerte, so dass sie nach einem Warmstart des Feldgeräts verwendet werden können.

Unterscheiden sich Kontrollcode und Bestätigungscode, so geht das Feldgerät im Schritt 116 in einen gesicherten Fehlerzustand über.

## Patentansprüche

1. Verfahren zur Parametrierung eines Feldgerätes (1), wobei von mindestens einer Parametriereinheit (2) mindestens ein Parameterwert an das Feldgerät (1) übermittelt wird, wobei von dem Feldgerät (1) mindestens ein Parameterwert empfangen wird, wobei von dem Feldgerät (1) mindestens eine Rückmelde-Zeichenkette mindestens aus dem mindestens einen empfangenen Parameterwert erzeugt wird, wobei von dem Feldgerät (1) die Rückmelde-Zeichenkette an die Parametriereinheit (2) übermittelt wird und wobei von der Parametriereinheit (2) die empfangene Rückmelde-Zeichenkette für einen Benutzer (4) verständlich ausgegeben - insbesondere visuell dargestellt - wird,
**dadurch gekennzeichnet,**
**dass** von dem Feldgerät (1) die Rückmelde-Zeichenkette derartig erzeugt wird, dass der vom Feldgerät (1) empfangene Parameterwert in eine Zeichenkette umgewandelt wird und dass in die Zeichenkette des empfangenen Parameterwerts an mindestens einer - insbesondere vorgebbaren oder allein durch das Feldgerät (1) festgelegten - Position mindestens ein - insbesondere für den Benutzer (4) verständliches und vorgebbares oder allein durch das Feldgerät (1) festgelegtes - Zeichen eingefügt wird.

2. Verfahren nach Anspruch 1, **dadurch gekennzeichnet, dass** von dem Feldgerät (1) die Rückmelde-Zeichenkette derartig erzeugt wird, dass die Rückmelde-Zeichenkette eine dem empfangenen Parameterwert zugehörige physikalische Einheit aufweist.

3. Verfahren nach Anspruch 1 oder 2, **dadurch gekennzeichnet, dass** N Parameterwerte von der Parametriereinheit (2) an das Feldgerät (1) übermittelt werden, dass von dem Feldgerät (1) N Parameterwerte empfangen werden, dass von dem Feldgerät (1) jeweils mindestens aus einem der N empfangenen Parameterwerte eine Rückmelde-Zeichenkette erzeugt wird, dass von dem Feldgerät (1) für jeden der N empfangenen Parameterwerte - insbesondere nach dem Empfang des jeweiligen Parameterwerts - die zugeordnete Rückmelde-Zeichenkette an die Parametriereinheit (2) übermittelt wird und dass von dem Feldgerät (1) dann ein Kontrollcode an die Parametriereinheit (2) übermittelt wird, wenn von dem Feldgerät (1) die N Rückmelde-Zeichenketten an die Parametriereinheit (2) übermittelt worden sind, wobei N eine ganze Zahl größer oder gleich 2 ist.

4. Verfahren nach Anspruch 3, **dadurch gekennzeichnet, dass** von dem Feldgerät (1) nach dem Übermitteln des Kontrollcodes an die Parametriereinheit (2) mindestens ein Bestätigungscode von der Parametriereinheit (2) empfangen wird, dass von dem Feldgerät (1) ausgehend von einem Vergleich von Kontrollcode und empfangenem Bestätigungscode ein Vergleichsergebnis erzeugt wird und dass von dem Feldgerät (1) in Abhängigkeit von dem Vergleichsergebnis die N empfangenen Parameterwerte für einen Betrieb des Feldgeräts (1) aktiviert werden.

5. Verfahren nach Anspruch 3 oder 4, **dadurch gekennzeichnet, dass** von dem Feldgerät (1) der Kontrollcode basierend auf mindestens einer Zufallszahl erzeugt wird.

6. Verfahren nach einem der Ansprüche 3 bis 5, **dadurch gekennzeichnet, dass** von einer Steuerkomponente (5) des Feldgeräts (1) der Kontrollcode erzeugt wird, wobei die Steuerkomponente (5) nach einem höheren Sicherheitsstandard ausgestaltet worden ist als mindestens eine andere Komponente (7) des Feldgeräts (1).

7. Verfahren nach einem der Ansprüche 1 bis 6, **dadurch gekennzeichnet, dass** von dem Feldgerät (1) der mindestens eine empfangene Parameterwert in mindestens einem Datenspeicher (7) abgespeichert wird und dass von dem Feldgerät (1) mindestens ausgehend von dem mindestens einen empfangenen Parameterwert - insbesondere zusätzlich ausgehend von dem erzeugten Kontrollcode und/oder dem empfangenen Bestätigungscode - mindestens ein Initial-Prüfwert erzeugt wird.

8. Verfahren nach Anspruch 7, **dadurch gekennzeichnet, dass** nach dem Abspeichern des mindestens einen empfangenen Parameterwerts mindestens einer Teilkomponente (8) des Feldgeräts (1) mindestens der eine abgespeicherte Parameterwert aus dem Datenspeicher (7) zugeführt wird, dass von dem Feldgerät (1) mindestens aus dem mindestens einen der Teilkomponente (8) zugeführten Parameterwert - insbesondere auch zusätzlich aus dem erzeugten Kontrollcode und/oder dem empfangenen Bestätigungscode - ein aktueller Prüfwert erzeugt wird und dass aus einem Vergleich zwischen dem Initial-Prüfwert und dem aktuellen Prüfwert ein Vergleichsergebnis erzeugt wird.

9. Feldgerät (1) mit mindestens einer Schnittstelle (6) zur Verbindung mit einer Parametriereinheit (2), mindestens einer Steuerkomponente (5) und mindestens einem Datenspeicher (7), wobei die Steuerkomponente (5) mindestens eine Rückmelde-Zeichenkette mindestens aus mindestens einem vom Feldgerät (1) empfangenen Parameterwert erzeugt,
**dadurch gekennzeichnet,**
**dass** die Steuerkomponente (5) die Rückmelde-Zeichenkette derartig erzeugt, dass der vom Feldgerät (1) empfangene Parameterwert in eine Zeichenkette umgewandelt wird und dass in die Zeichenkette des empfangenen Parameterwerts an mindestens einer - insbesondere vorgebbaren oder allein durch die Steuerkomponente (5) festgelegten - Position mindestens ein - insbesondere für einen Benutzer (4) verständliches und vorgebbares oder allein durch die Steuerkomponente (5) festgelegtes - Zeichen eingefügt wird.

10. Feldgerät (1) nach Anspruch 9, **dadurch gekennzeichnet, dass** das Feldgerät (1) und die Parametriereinheit (2) einstückig ausgestaltet sind.

## Claims

1. Method for parameterization of a field device (1), wherein at least one parameter value is transmitted to the field device (1) by at least one parameter unit (2), wherein at least one parameter value is received by the field device (1), wherein at least one feedback character string is generated by the field device (1) from the at least one received parameter value, wherein the feedback character string is transmitted to the parameterization unit (2) by the field device (1) and wherein the received feedback character string is output by the parameterization unit (2) so that it is understandable for the user (4) - in particular, is visually displayed -
**characterized in**
**that** the feedback character string is generated by the field device (1) in such a manner that the parameter value received by the field device (1) is converted into a character string and that at least one character - in particular understandable for the user (4) and predeterminable or set solely by the field device (1) - is inserted in the character string of the received parameter value at at least one position - in particular predeterminable or set solely by the field device (1).

2. Method according to claim 1, **characterized in that** the feedback character string is generated by the field device (1) in such a manner that the feedback character string has a physical unit of measurement associated with the received parameter value.

3. Method according to claim 1 or 2, **characterized in that** N parameter values are transmitted from the parameterization unit (2) to the field device (1), that N parameter values are received by the field device (1), that a feedback character string is generated respectively from at least one of the N received parameter values by the field device (1), that, for each of the N received parameter values - in particular after receiving each parameter value -, the associated feedback character string is transmitted to the parameterization unit (2) by the field device (1) and that a control code is transmitted to the parameterization unit (2) by the field device (1) when the N feedback character strings have been transmitted to the parameterization unit (2) by the field device (1), wherein N is an integer greater than or equal to 2.

4. Method according to claim 3, **characterized in that**, after the field device (1) transmits the control code to the parameterization unit (2), at least one confirmation code is received by the parameterization unit (2), that a comparison result is generated by the field device (1) based on a comparison of the control code and the received confirmation code and that, depending on the comparison result, the N received parameter values are activated by the field device (1) for an operation of the field device (1).

5. Method according to claim 3 or 4, **characterized in that** the control code is generated by the field device (1) based on at least one random number.

6. Method according to any one of claims 3 to 5, **characterized in that** the control code is generated by a control component (5) of the field device (1), wherein the control component (5) is designed with a higher safety standard than at least one other component (7) of the field device (1).

7. Method according to any one of claims 1 to 6, **characterized in that** the at least one parameter value received by the field device (1) is stored in at least one data storage (7) and that at least one initial test value is generated by the field device (1) at least based on the at least one received parameter value - in particular, additionally based on the generated control code and/or the received confirmation code.

8. Method according to claim 7, **characterized in that** after storing the at least one received parameter value, at least one subcomponent (8) of the field device (1) is supplied at least the one received parameter value from the data storage (7), that at least a current test value is generated by the field device (1) from the at least one parameter value supplied to the subcomponent (8) - also, in particular, additionally from the generated control code and/or the received confirmation code - and that a comparison result is generated from a comparison between the initial test value and the current test value.

9. Field device (1) having at least one interface (6) for connection to a parameterization unit (2), at least one control component (5) and at least one data storage (7), wherein the control component (5) generates at least one feedback character string from at least one parameter value received by the field device (1),
**characterized in**
**that** the control component (5) generates the feedback character string in such a manner that the parameter value received by the field device (1) is converted into a character string and that at least one character - in particular understandable for the user (4) and predeterminable or set solely by the field device (1) - is inserted in the character string of the received parameter value at at least one position - in particular predeterminable or set solely by the field device (1).

10. Field device (1) according to claim 9, **characterized in that** the field device (1) and the parameterization unit (2) are integrally designed.

## Revendications

1. Procédé de paramétrage d'un appareil de terrain (1), dans lequel au moins une valeur de paramètre est transmise à l'appareil de terrain (1) par au moins une unité de paramétrage (2), dans lequel au moins une valeur de paramètre est reçue par l'appareil de terrain (1), dans lequel au moins une chaîne de caractères de message de retour est générée par l'appareil de terrain (1) à partir de l'au moins une valeur de paramètre reçue, dans lequel la chaîne de caractères de message de retour est transmise par l'appareil de terrain (1) à l'unité de paramétrage (2) et dans lequel la chaîne de caractères de message de retour reçue est délivrée par l'unité de paramétrage (2)de manière intelligible par un utilisateur (4) - en étant notamment représentée visuellement -,
**caractérisé en ce que** la chaîne de caractères de message de retour est générée par l'appareil de terrain (1) de manière à ce que la valeur de paramètre reçue par l'appareil de terrain (1) soit convertie en une chaîne de caractères et **en ce qu'**au moins un signe - notamment intelligible par l'utilisateur (4) et qui peut être prédéterminé ou est seulement fixé par l'intermédiaire de l'appareil de terrain (1) - est introduit dans la chaîne de caractères de la valeur de paramètre reçue à au moins une position - qui peut notamment être prédéterminée ou est seulement fixée par l'appareil de terrain (1).

2. Procédé selon la revendication 1, **caractérisé en ce que** la chaîne de caractères du message de retour d'information est générée par l'appareil de terrain (1) de manière à ce que la chaîne de caractères du message de retour comprenne une unité physique associée à la valeur de paramètre reçue.

3. Procédé selon la revendication 1 ou 2, **caractérisé en ce que** N valeurs de paramètres sont transmises par l'unité de paramétrage (2) à l'appareil de terrain (1), **en ce que** N valeurs de paramètres sont reçues par l'appareil de terrain (1), **en ce qu'**au moins une chaîne de caractères de message de retour est respectivement générée par l'appareil de terrain (1) à partir de l'une des N valeurs de paramètres reçues, **en ce que**, pour chacune des N valeurs de paramètres reçues - notamment après la réception de la valeur de paramètre respective - la chaîne de caractères de retour associée est transmise par l'appareil de terrain (1) à l'unité de paramétrage (2) et **en ce qu'**un code de contrôle est ensuite transmis par l'appareil de terrain (1) à l'unité de paramétrage (2) lorsque les N chaînes de caractères de retour ont été transmises par l'appareil de terrain (1) à l'unité de paramétrage (2), N étant un nombre entier supérieur ou égal à 2.

4. Procédé selon la revendication 3, **caractérisé en ce qu'**au moins un code de confirmation est reçu par l'unité de paramétrage (2) après la transmission par l'appareil de terrain (1) du code de contrôle à l'unité de paramétrage (2), **en ce qu'**un résultat de comparaison est généré par l'appareil de terrain (1) à partir d'une comparaison du code de contrôle et du code de confirmation reçu et **en ce que** les N valeurs de paramètres reçues sont activées par l'appareil de terrain (1) en fonction du résultat de la comparaison pour une mise en fonctionnement de l'appareil de terrain (1).

5. Procédé selon la revendication 3 ou 4, **caractérisé en ce que** le code de contrôle est généré par l'appareil de terrain (1) sur la base d'au moins un nombre aléatoire.

6. Procédé selon l'une quelconque des revendications 3 à 5, **caractérisé en ce que** le code de contrôle est généré par un composant de commande (5) de l'appareil de terrain (1), dans lequel le composant de commande (5) a été réalisé conformément à une norme de sécurité plus élevée qu'au moins un autre composant (7) de l'appareil de terrain (1).

7. Procédé selon l'une quelconque des revendications 1 à 6, **caractérisé en ce que** l'au moins une valeur de paramètre reçue est stockée par l'appareil de terrain (1) dans au moins une mémoire de données (7) et **en ce qu'**au moins une valeur d'essai initiale est générée par l'appareil de terrain (1) au moins à partir de l'au moins une valeur de paramètre reçue - notamment en outre à partir du code de contrôle généré et/ou du code de confirmation reçu.

8. Procédé selon la revendication 7, **caractérisé en ce qu'**au moins ladite valeur de paramètre stockée en mémoire est acheminée depuis la mémoire de données (7) vers au moins un composant partiel (8) de l'appareil de terrain (1) après la mise en mémoire de l'au moins une valeur de paramètre reçue, **en ce qu'**au moins une valeur d'essai actuelle est générée par l'appareil de terrain (1) à partir de l'au moins une valeur de paramètre acheminée vers le composant partiel (8) - notamment également en outre à partir du code de contrôle généré et/ou du code de confirmation reçu - et **en ce qu'**un résultat de comparaison est généré à partir d'une comparaison entre la valeur d'essai initiale et la valeur d'essai actuelle.

9. Appareil de terrain (1) comportant au moins une interface (6) destinée à être connectée à une unité de paramétrage (2), au moins un composant de commande (5) et au moins une mémoire de données (7), dans lequel le composant de commande (5) génère au moins une chaîne de caractères de message de retour au moins à partir d'au moins une valeur de paramètre reçue par l'appareil de terrain (1),
**caractérisé en ce que** le composant de commande (5) génère la chaîne de caractères de message de retour de manière à ce que la valeur de paramètre reçue par l'appareil de terrain (1) soit convertie en une chaîne de caractères et **en ce qu'**au moins un signe - notamment intelligible par un utilisateur (4) et pouvant être prédéterminé ou seulement fixé par l'intermédiaire du composant de commande (5) - est introduit dans la chaîne de caractères de la valeur de paramètre reçue à au moins une position - qui peut notamment être prédéterminée ou est seulement fixée par l'intermédiaire du composant de commande (5).

10. Appareil de terrain (1) selon la revendication 9, **caractérisé en ce que** l'appareil de terrain (1) et l'unité de paramétrage (2) sont réalisés d'un seul tenant.
